# EUROPEAN PATENT APPLICATION

(11) **EP 4 742 328 A1**
(43) Date of publication of application: **13.05.2026**
(21) Application number: 25207794.6
(22) Date of filing: 09.10.2025
(51) Int. Cl.: H01M 4/66, H01M 4/70, H01M 10/04, H01M 10/0587

(54) **WOUND ELECTRODE ASSEMBLY**

(30) Priority: 06.11.2024 JP 2024194198
(71) Applicant: TOYOTA JIDOSHA KABUSHIKI KAISHA, Toyota-shi, Aichi-ken 471-8571 (JP)
(72) Inventor: TATEISHI, Mitsuru, Toyota-shi, 471-8571 (JP); UEDA, Masashi, Toyota-shi, 471-8571 (JP); IZUMI, Jun, Toyota-shi, 471-8571 (JP); MASUOKA, Shizuka, Toyota-shi, 471-8571 (JP); SATO, Aya, Toyota-shi, 471-8571 (JP); KATAYAMA, Yuji, Kosai-shi, 431-0422 (JP); YAMAMOTO, Tatsuya, Kosai-shi, 431-0422 (JP); MACHIDA, Keitaro, Kosai-shi, 431-0422 (JP)
(74) Representative: Kuhnen & Wacker Patent- und Rechtsanwaltsbüro PartG mbB

(57) **Abstract**

A wound electrode assembly (10) has a positive electrode (11) and a negative electrode (12) wound in a flat shape with a separator (13) in between, and includes a pair of flat portions (91) facing each other with a winding center in between and a pair of curved portions (92) connecting ends of the pair of flat portions (91) to each other. The positive electrode (11) includes a first base member including a first metal foil (111) and a first resin member (112) alternately joined along a winding direction of the wound electrode assembly (10). The negative electrode (12) includes a second base member including a second metal foil (121) and a second resin member (122) alternately joined along the winding direction. In each of the pair of flat portions (91), the first metal foil (111) and the second metal foil (121) are alternately arranged in a direction in which the pair of flat portions (91) face each other. In each of the pair of curved portions (92), the first resin member (112) and the second resin member (122) are alternately arranged in a radial direction of the wound electrode assembly (10).

## Description

### CROSS REFERENCE TO RELATED APPLICATIONS

This nonprovisional application is based on Japanese Patent Application No. 2024-194198 filed on November, 6, 2024 with the Japan Patent Office, the entire contents of which are hereby incorporated by reference.

### BACKGROUND

### Field

The present disclosure relates to a wound electrode assembly.

### Description of the Background Art

Japanese Patent Laying-Open No. 2016-042433 discloses, as a conventional electrode assembly, a wound electrode assembly including a positive electrode having a first metal foil and a positive-electrode active material layer formed on the first metal foil and a negative electrode having a second metal foil and a negative-electrode active material layer formed on the second metal foil, wherein the positive electrode and the negative electrode are wound with a separator in between.

### SUMMARY

The wound electrode assembly has a pair of flat portions facing each other with a winding center in between, and a pair of curved portions connecting ends of the pair of flat portions to each other. In the wound electrode, the pair of curved portions are maintained in a bent state, and a higher stress is applied to the pair of curved portions than to the pair of flat portions.

The present disclosure has been made in view of the problem described above. An object of the present disclosure is to provide a wound electrode assembly that can suppress damage to the curved portion.

A wound electrode assembly according to the present disclosure is a wound electrode assembly that has a positive electrode and a negative electrode wound in a flat shape with a separator in between and that includes a pair of flat portions facing each other with a winding center in between and a pair of curved portions connecting ends of the pair of flat portions to each other. In the wound electrode assembly, the positive electrode includes a first base member including a first metal foil and a first resin member alternately joined along a winding direction of the wound electrode assembly. The negative electrode includes a second base member including a second metal foil and a second resin member alternately joined along the winding direction. In each of the pair of flat portions, the first metal foil and the second metal foil are alternately arranged in a direction in which the pair of flat portions face each other. In each of the pair of curved portions, the first resin member and the second resin member are alternately arranged in a radial direction of the wound electrode assembly.

With the configuration described above, in each of the pair of curved portions, the first resin member and the second resin member are alternately disposed in the radial direction of the wound electrode assembly, thus, the curved portion easily deforms by deflection and is less easily bent compared with the configuration in which the metal foil is disposed in the curved portion. This can suppress damage to the curved portion even when a high stress is applied to the curved portion.

In the wound electrode assembly according to the present disclosure, in a cross section perpendicular to a winding axis of the wound electrode assembly, a first boundary, which is a boundary between the first metal foil and the first resin member, may be located at boundaries between the pair of flat portions and the pair of curved portions. A second boundary, which is a boundary between the second metal foil and the second resin member, may be located at the boundaries between the pair of flat portions and the pair of curved portion.

With the configuration described above, the curved portion is entirely formed of a resin member. This can further suppress damage to the curved portion.

In the wound electrode assembly according to the present disclosure, in the cross section perpendicular to the winding axis, at each of the boundaries between the pair of flat portions and the pair of curved portions, the first boundary and the second boundary may be alternately disposed side by side in an arrangement direction in which the first metal foil and the second metal foil are alternately aligned.

Also in the configuration described above, the curved portion is entirely formed of a resin member. This can further suppress damage to the curved portion.

In the wound electrode assembly according to the present disclosure, when a direction orthogonal to the winding axis and to a direction in which the pair of flat portions face each other is a width direction, in the cross section perpendicular to the winding axis, at each of the boundaries between the pair of flat portions and the pair of curved portions, the first boundary and the second boundary may be alternately disposed as to be positioned toward inward in the width direction from an outer peripheral side to an inner peripheral side of the wound electrode assembly.

With the configuration described above, the curved portion can be formed in a fan shape, and accordingly, deforms easily. This can suppress breakage or the like of the curved portion when a stress is applied to the curved portion.

In the wound electrode assembly according to the present disclosure, when a direction orthogonal to the winding axis and to a direction in which the pair of flat portions face each other is a width direction, in the cross section perpendicular to the winding axis, at each of the boundaries between the pair of flat portions and the pair of curved portions, the first boundary and the second boundary may be alternately disposed as to be positioned toward outward in the width direction from an outer peripheral side to an inner peripheral side of the wound electrode assembly.

With the configuration described above, in the pair of flat portions, the ratio (length) of the metal foil disposed inside the wound electrode assembly is larger than the ratio (length) of the metal foil disposed outside the wound electrode assembly.

In general, heat tends to accumulate inside the wound electrode assembly, but the configuration described above can increase the ratio of the metal foil inside the wound electrode assembly, thus improving heat dissipation.

In the wound electrode assembly according to the present disclosure, the first resin member may have a thickness smaller than of the first metal foil.

With the configuration described above, the curved portion is bent easily because the thickness of the first resin member is smaller than that of the first metal foil.

In the wound electrode assembly according to the present disclosure, the second resin member may have a thickness smaller than that of the second metal foil.

With the configuration described above, the curved portion is easily bent because the thickness of the second resin member is smaller than that of the second metal foil.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view of a battery according to Embodiment 1.
Fig. 2 is an exploded perspective view of the battery according to Embodiment 1.
Fig. 3 is a sectional view of the battery shown in Fig. 1 as viewed in the direction of an arrow III-III.
Fig. 4 is a sectional view of a wound electrode assembly shown in Fig. 3 as viewed in the direction of an arrow IV-IV.
Fig. 5 is a sectional view of a positive electrode of the wound electrode assembly shown in Fig. 3, which is unfolded.
Fig. 6 is a sectional view of a negative electrode of the wound electrode assembly shown in Fig. 3, which is unfolded.
Fig. 7 is a sectional view of a wound electrode assembly according to Embodiment 2.
Fig. 8 is a sectional view of a wound electrode assembly according to Embodiment 3.

### DESCRIPTION OF THE PREFERRED EMBODIMENTS

Embodiments of the present disclosure will be described below with reference to the drawings. In the embodiments described below, the same or common components have the same reference signs allotted, and description thereof will not be repeated.

### (Embodiment 1)

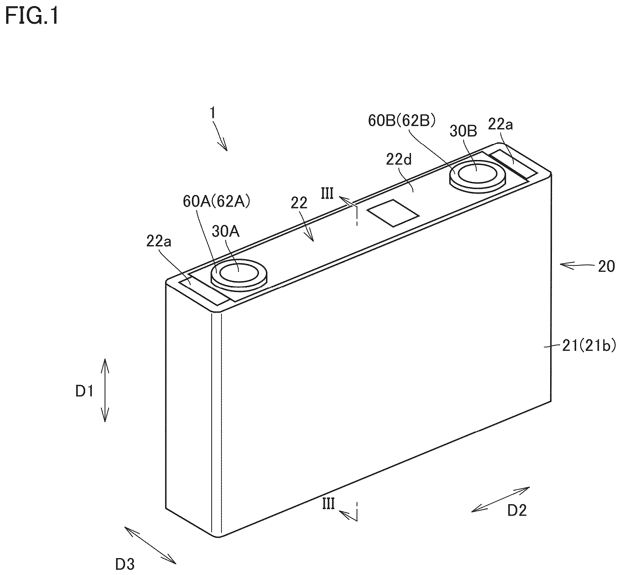

Fig. 1 is a perspective view of a battery according to Embodiment 1. A battery 1 according to Embodiment 1 will be described with reference to Fig. 1.

As shown in Fig. 1, a battery 1 is a so-called rectangular battery. Battery 1 may be a secondary battery capable of charging and discharging, such as a lithium-ion battery or a nickel-metal hydride battery. Battery 1 may be used as, for example, a cell included in a power storage module mounted in an electrically powered vehicle.

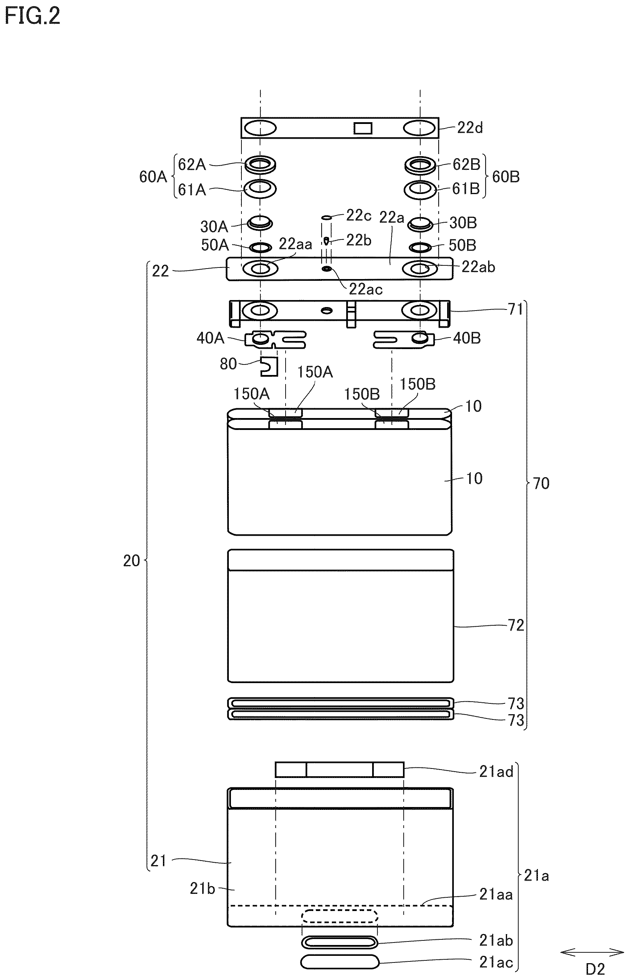

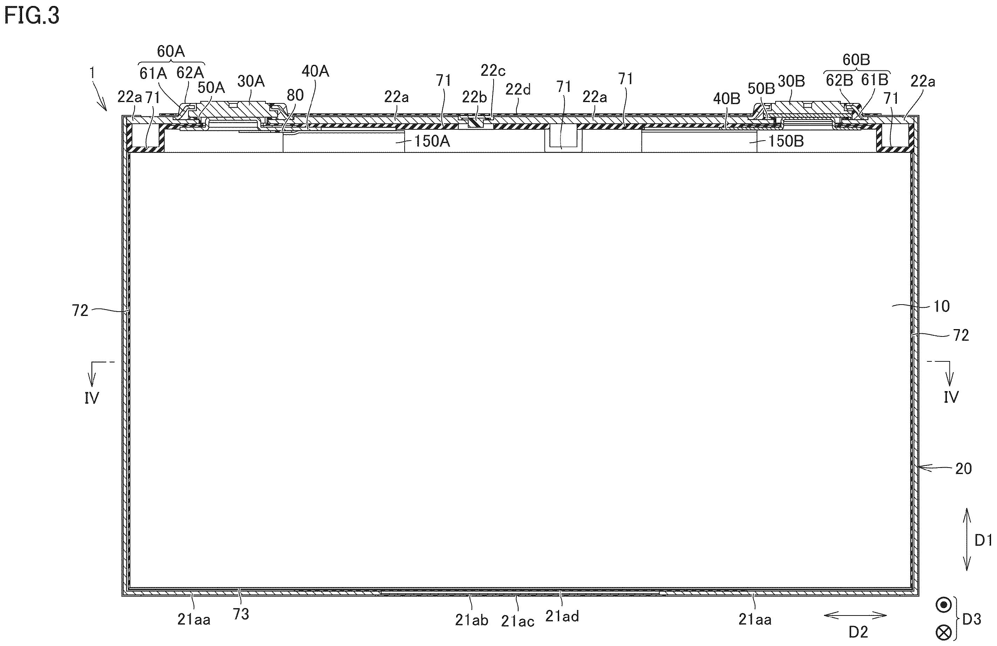

Fig. 2 is an exploded perspective view of the battery according to Embodiment 1. Fig. 3 is a sectional view of the battery of Fig. 1 as viewed in the direction of an arrow III-III.

As shown in Figs. 1 to 3, battery 1 includes a plurality of wound electrode assemblies 10, a case 20, a first external terminal 30A, a second external terminal 30B, a first coupling member 40A, a second coupling member 40B, a first seal ring 50A, a second seal ring 50B, a first terminal support portion 60A, a second terminal support portion 60B, an insulating member 70, and a fuse protection portion 80. First, the components of battery 1 other than wound electrode assembly 10 will be described.

Case 20 has electrical insulation properties. An electrically conductive portion of case 20 is made of, for example, a metal such as aluminum. Case 20 accommodates wound electrode assemblies 10. Case 20 also accommodates an electrolyte (not shown).

Case 20 includes a case body 21 and a lid 22. Case body 21 includes a bottom wall 21a and a peripheral wall 21b that rises from bottom wall 21a.

Bottom wall 21a includes a bottom body 21aa, a pressure release valve 21ab, an outer protective film 21ac, and an inner protective film 21ad. Peripheral wall 21b rises from bottom body 21aa. Pressure release valve 21ab is provided in bottom body 21aa. Outer protective film 21ac covers pressure release valve 21ab from the outside. Inner protective film 21ad covers pressure release valve 21ab from the inside. Bottom body 21aa and pressure release valve 21ab are made of a metal such as aluminum.

An opening is formed at the top of peripheral wall 21b. Peripheral wall 21b has an approximately rectangular external shape as viewed from the direction of the opening (the direction of the normal to the opening surface). The opening and bottom wall 21a are aligned in a first direction D1. First direction D1 may be the height direction or the upward-downward direction of battery 1. Peripheral wall 21b is made of a metal such as aluminum.

Lid 22 includes a lid body 22a, a sealing plug 22b, a plug cover 22c, and an insulating cover 22d.

Lid body 22a is joined to peripheral wall 21b by welding or the like so as to close the opening of peripheral wall 21b. Lid body 22a has a first coupling hole 22aa, a second coupling hole 22ab, and an injection hole 22ac. Injection hole 22ac is a through hole for injecting the electrolyte into case body 21 during manufacture of battery 1.

Sealing plug 22b seals injection hole 22ac. Plug cover 22c covers injection hole 22ac and sealing plug 22b. Insulating cover 22d covers injection hole 22ac, sealing plug 22b, and plug cover 22c.

First external terminal 30A and second external terminal 30B are provided so as to be exposed to the outside in battery 1. First coupling member 40A and second coupling member 40B are electrically conductive. First coupling member 40A and second coupling member 40B are at least partially disposed inside case 20.

First external terminal 30A or first coupling member 40A is inserted into first coupling hole 22aa. First external terminal 30A and first coupling member 40A are joined to each other. First coupling member 40A is joined to wound electrode assembly 10. As a result, first external terminal 30A is electrically connected to wound electrode assembly 10.

Second external terminal 30B or second coupling member 40B is inserted into second coupling hole 22ab. Second external terminal 30B and second coupling member 40B are joined to each other. Second coupling member 40B is joined to wound electrode assembly 10. As a result, second external terminal 30B is electrically connected to wound electrode assembly 10.

In the present embodiment, first external terminal 30A is a positive terminal, and second external terminal 30B is a negative terminal. First external terminal 30A and second external terminal 30B are aligned in a second direction D2. Second direction D2 is a direction orthogonal to first direction D1.

First seal ring 50A is provided along first coupling hole 22aa. First seal ring 50A is provided in the gap between lid body 22a and first external terminal 30A, and seals this gap. Second seal ring 50B is provided along second coupling hole 22ab. Second seal ring 50B is provided in the gap between lid body 22a and second external terminal 30B, and seals this gap. First seal ring 50A and second seal ring 50B have electrical insulation properties.

First terminal support portion 60A is locked to lid body 22a. First terminal support portion 60A supports first external terminal 30A from the outer peripheral side of first external terminal 30A. First terminal support portion 60A includes a first locking ring 61A and a first covering ring 62A. First locking ring 61A extends annularly so as to surround first coupling hole 22aa and is directly locked to lid body 22a. First covering ring 62A covers first locking ring 61A. First locking ring 61A supports first external terminal 30A via first covering ring 62A. First covering ring 62A is formed of a resin member having electrical insulation properties or relatively weak electrical conductivity.

Second terminal support portion 60B is locked to lid body 22a. Second terminal support portion 60B supports second external terminal 30B from the outer peripheral side of second external terminal 30B. Second terminal support portion 60B includes a second locking ring 61B and a second covering ring 62B. Second locking ring 61B extends annularly so as to surround second coupling hole 22ab and is directly locked to lid body 22a. Second covering ring 62B covers second locking ring 61B. Second locking ring 61B supports second external terminal 30B via second covering ring 62B. Second covering ring 62B is formed of an electrically insulating resin member.

Insulating member 70 has electrical insulation properties. Insulating member 70 is disposed between the plurality of wound electrode assemblies 10 and case 20. Insulating member 70 electrically insulates the plurality of wound electrode assemblies 10 from case 20. Insulating member 70 includes an insulating bracket 71, a peripheral insulating portion 72, and a bottom insulating portion 73.

Insulating bracket 71 is disposed between the plurality of wound electrode assemblies 10 and lid body 22a. Insulating bracket 71 has relatively high rigidity and is in contact with both of wound electrode assembly 10 and lid body 22a. As a result, wound electrode assembly 10 is fixed to case 20 in first direction D1.

Peripheral insulating portion 72 is disposed between the plurality of wound electrode assemblies 10 and peripheral wall 21b. Peripheral insulating portion 72 is formed of a film-shaped member.

Bottom insulating portion 73 is disposed between each wound electrode assembly 10 and bottom wall 21a. Bottom insulating portion 73 is formed of a film-shaped member. In the present embodiment, bottom insulating portion 73 is bonded to wound electrode assembly 10. Further, bottom insulating portion 73 covers only a part of the bottom surface of wound electrode assembly 10. Bottom insulating portion 73 may cover the entire bottom surface.

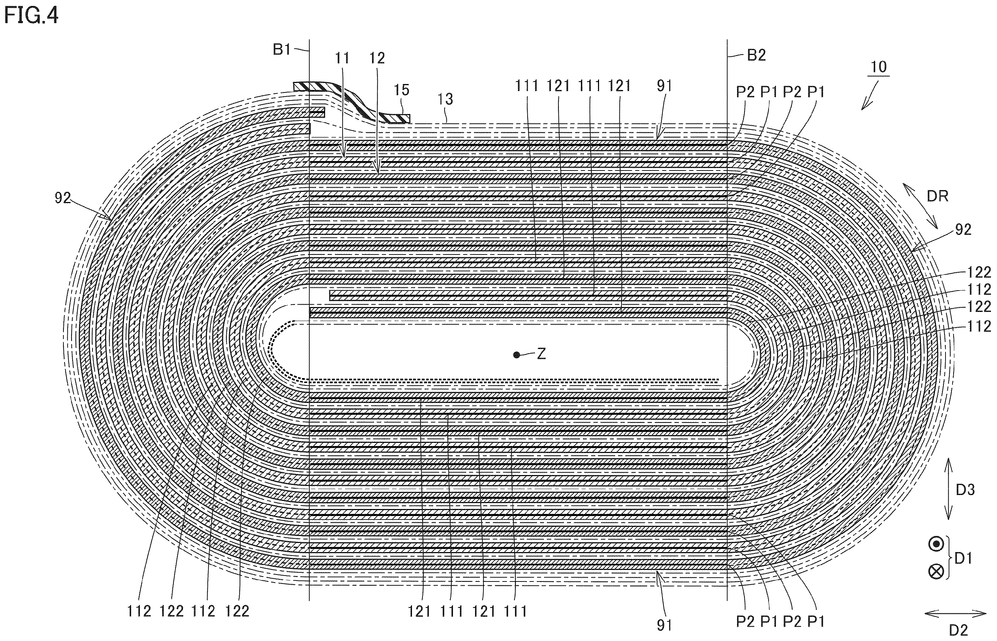

Wound electrode assembly 10 is provided with a plurality of first tabs 150A and a plurality of second tabs 150B. The plurality of first tabs 150A are connected, on one end side, to a first metal foil 111 (see Fig. 4) of a positive electrode 11 (see Fig. 4), which will be described later. The plurality of first tabs 150A are joined, on the other end side, to first coupling member 40A described above by ultrasonic welding or the like.

The plurality of second tabs 150B are connected, on one end side, to a second metal foil 121 (see Fig. 4) of a negative electrode 12 (see Fig. 4), which will be described later. The plurality of second tabs 150B are joined, on the other end side, to second coupling member 40B described above by ultrasonic welding or the like.

As shown in Fig. 2, battery 1 according to the present embodiment includes a plurality of wound electrode assemblies 10. Battery 1 typically includes two wound electrode assemblies 10. These wound electrode assemblies 10 are aligned in a third direction D3. Third direction D3 is a direction orthogonal to both of first direction D1 and second direction D2. Peripheral insulating portion 72 may integrally cover the plurality of wound electrode assemblies 10 such that the plurality of wound electrode assemblies 10 are fixed to each other. In the present embodiment, insulating portion 70 includes a plurality of bottom insulating portions 73 in one-to-one correspondence with the plurality of wound electrode assemblies 10.

Fig. 4 is a sectional view of the wound electrode assembly shown in Fig. 3 as viewed in the direction of an arrow IV-IV. Referring to Fig. 4, wound electrode assembly 10 according to Embodiment 1 will be described in detail.

As shown in Fig. 4, wound electrode assembly 10 is configured of positive electrode 11 and negative electrode 12 wound in a flat shape with separator 13 in between. Separator 13 is disposed on the innermost side and the outermost side of wound electrode assembly 10. The outer peripheral edge of separator 13 in a winding direction DR is fixed by a tape member 15 disposed on the outer peripheral surface of separator 13.

Separator 13 is provided between positive electrode 11 and negative electrode 12. Separator 13 separates positive electrode 11 from negative electrode 12 while allowing ions to pass between positive electrode 11 and negative electrode 12. The ions may be, for example, lithium ions. Separator 13 has electrical insulation properties.

Separator 13 may include, for example, a polyolefin resin. Separator 13 may be substantially made of the polyolefin resin. The polyolefin resin may include, for example, at least one selected from the group consisting of polyethylene (PE) and polypropylene (PP).

Wound electrode assembly 10 has, as components thereof, a pair of flat portions 91 facing each other with the winding center in between, and a pair of curved portions 92 connecting ends of the pair of flat portions.

The pair of flat portions 91 have a thin plate shape parallel to a winding axis Z. In the present embodiment, the pair of flat portions 91 face each other in third direction D3 orthogonal to the winding axis Z direction. The pair of curved portions 92 form the opposite ends of wound electrode assembly 10 in a direction orthogonal to both the thickness direction (third direction D3) of flat portion 91 and the winding axis Z direction. Specifically, the pair of curved portions 92 form the opposite ends of wound electrode assembly 10 in second direction D2. Each of the pair of curved portions 92 protrudes outward in second direction D2. Each of the pair of curved portions 92 is curved so as to project outward in second direction D2.

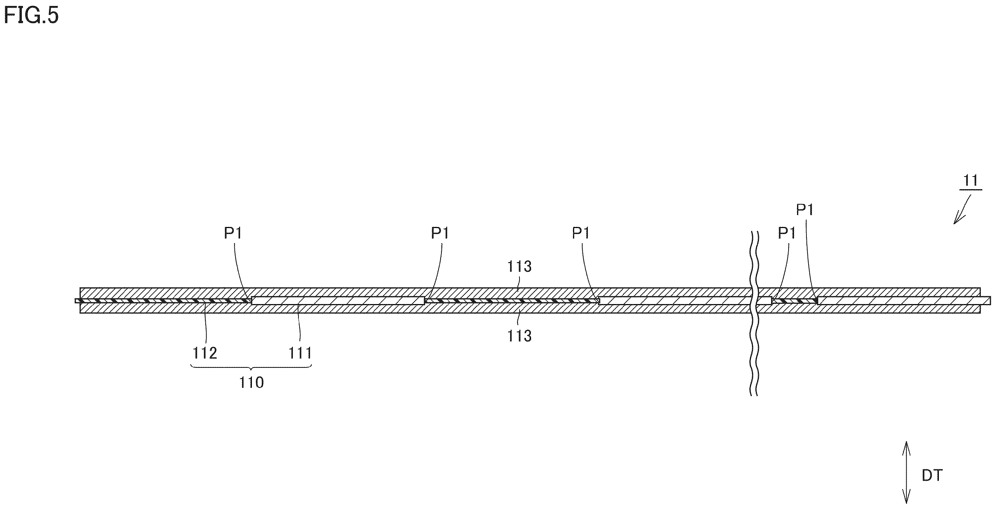

Fig. 5 is a sectional view of a positive electrode of the wound electrode assembly shown in Fig. 3, which is unfolded. As shown in Fig. 5, positive electrode 11 has a sheet shape extending in the longitudinal direction in the unfolded state. With positive electrode 11 wound, the longitudinal direction is the winding direction of wound electrode assembly 10. Positive electrode 11 includes a first base member 110 and a positive-electrode active material layer 113 provided on first base member 110. First base member 110 includes first metal foil 111 and a first resin member 112 alternately joined in the longitudinal direction in the unfolded state. Each boundary between first metal foil 111 and first resin member 112 is indicated as a first boundary P1 in Fig. 5. The thickness of first resin member 112 in a thickness direction DT may be smaller than that of first metal foil 111. Thickness direction DT of first base member 110 is approximately parallel to third direction D3 in flat portion 91.

First metal foil 111 may be, for example, an aluminum-containing metal member. First resin member 112 may be, for example, polyethylene (PE), polypropylene (PP), polyphenylene sulfide (PPS), polyethylene terephthalate (PET), or the like. First resin member 112 may have electrical insulation properties. In order to reduce the electrical resistance of first base member 110, first resin member 112 may contain conductive fine particles.

Each of first metal foil 111 and first resin member 112 has a first main surface and a second main surface aligned in thickness direction DT. Positive-electrode active material layer 113 is provided on the first main surface and the second main surface of first metal foil 111 and on the first main surface and the second main surface of first resin member 112. Positive-electrode active material layer 113 may be any publicly-known layer.

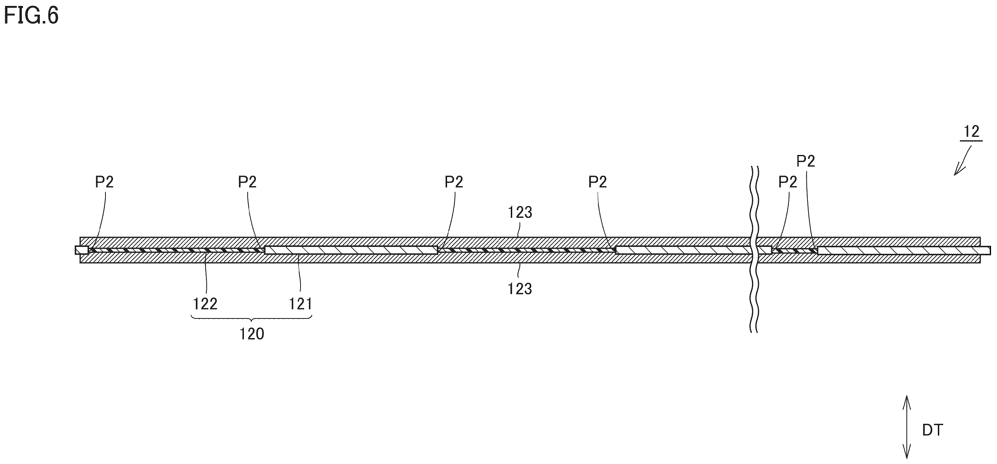

Fig. 6 is a sectional view of a negative electrode of the wound electrode assembly shown in Fig. 3, which is unfolded. As shown in Fig. 6, negative electrode 12 has a sheet shape extending in the longitudinal direction in the unfolded state. With negative electrode 12 wound, the longitudinal direction is the winding direction of wound electrode assembly 10. Negative electrode 12 includes a second base member 120 and a negative-electrode active material layer 123 provided on second base member 120. Second base member 120 includes second metal foil 121 and second resin member 122 alternately joined in the longitudinal direction in the unfolded state. Each boundary between second metal foil 121 and second resin member 122 is indicated as a second boundary P2 in Fig. 5. The thickness of second resin member 122 in thickness direction DT may be smaller than that of second metal foil 121. Thickness direction DT of second base member 120 is approximately parallel to third direction D3 in flat portion 91.

Second metal foil 121 may be, for example, a copper-containing metal member. Second resin member 122 may be, for example, polyethylene (PE), polypropylene (PP), polyphenylene sulfide (PPS), polyethylene terephthalate (PET), or the like. Second resin member 122 may have electrical insulation properties. In order to reduce the electrical resistance of first base member 110, second resin member 122 may contain conductive fine particles.

Each of second metal foil 121 and second resin member 122 has a first main surface and a second main surface aligned in thickness direction DT. Negative-electrode active material layer 123 is provided on the first main surface and the second main surface of second metal foil 121 and on the first main surface and the second main surface of second resin member 122. Negative-electrode active material layer 123 may be any publicly-known layer.

Referring to Figs. 4 to 6, in wound electrode assembly 10, first metal foil 111 and first resin member 112 are alternately joined along the winding direction in first base member 110 of positive electrode 11. Similarly, in wound electrode assembly 10, second metal foil 121 and second resin member 122 are alternately joined along the winding direction in second base member 120 of negative electrode 12.

In each of the pair of flat portions 91 described above, first metal foil 111 and second metal foil 121 are alternately arranged in the direction in which the pair of flat portions face each other. In each of the pair of curved portions 92, first resin member 112 and second resin member 122 are alternately arranged in the radial direction of wound electrode assembly 10.

As first resin member 112 and second resin member 122 are alternately disposed in the radial direction in curved portion 92 as described above, curved portion 92 more easily deforms by deflection and is less easily broken compared with a configuration in which a metal foil is disposed in curved portion 92. As a result, even when a high stress is applied to curved portion 92, damage to curved portion 92 can be suppressed.

Further, in a cross section perpendicular to winding axis Z of wound electrode assembly 10, first boundary P1, which is the boundary between first metal foil 111 and first resin member 112, is located at boundaries B1 and B2 between the pair of flat portions 91 and the pair of curved portions 92, and second boundary P2, which is the boundary between second metal foil 121 and second resin member 122, is located at boundaries B1, B2 between the pair of flat portions 91 and the pair of curved portions 92. As a result, curved portion 92 is entirely formed of the resin member. This can further suppress damage to curved portion 92.

More specifically, at each of the boundaries between the pair of flat portions 91 and the pair of curved portions 92, first boundary P1 and second boundary P2 are alternately disposed side by side in the arrangement direction in which first metal foil 111 and second metal foil 121 are alternately disposed from the inner peripheral side to the outer peripheral side of wound electrode assembly 10. In other words, each of the boundaries between the pair of flat portions 91 and the pair of curved portions 92 is parallel to third direction D3.

More specifically, at each of the boundaries between the pair of flat portions 91 and the pair of curved portions 92, first boundary P1 and second boundary P2 are alternately arranged side by side in the arrangement direction in which first metal foil 111 and second metal foil 121 are alternately aligned from the inner peripheral side to the outer peripheral side of wound electrode assembly 10. In other words, each of the boundaries between the pair of flat portions 91 and the pair of curved portions 92 is parallel to third direction D3.

Also in the configuration as describe above, curved portion 92 is entirely formed of the resin member. This can further suppress damage to curved portion 92.

Further, since the thickness of first resin member 112 is smaller than the thickness of first metal foil 111, curved portion 92 is easily bent. Additionally, since the thickness of second resin member 122 is smaller than the thickness of second metal foil 121, curved portion 92 is easily bent. This can further suppress damage to curved portion 92.

### (Embodiment 2)

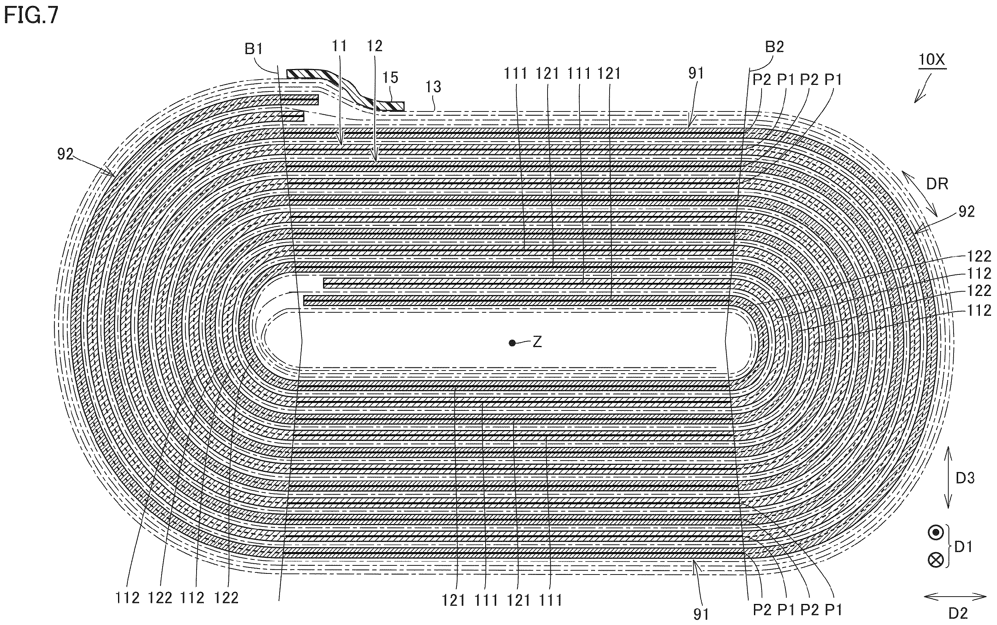

Fig. 7 is a sectional view of a wound electrode assembly according to Embodiment 2. Fig. 7 is a sectional view corresponding to the sectional view of the battery shown in Fig. 1 in Embodiment 1 as viewed in the direction of arrow III-III. Referring to Fig. 7, a wound electrode assembly 10X according to Embodiment 2 will be described.

As shown in Fig. 7, in comparison, wound electrode assembly 10X according to Embodiment 2 differs from wound electrode assembly 10 according to Embodiment 1 in the positions of the boundaries between the pair of flat portions 91 and the pair of curved portions 92. The other configurations are substantially the same.

When the direction orthogonal to the direction in which the pair of flat portions 91 face each other and to the winding axis Z direction of wound electrode assembly 10 is the width direction, in a cross section perpendicular to winding axis Z of wound electrode assembly 10, each of the boundaries between the pair of flat portions 91 and the pair of curved portions 92 is inclined inward in the width direction from the outer peripheral side to the inner peripheral side of wound electrode assembly 10. The width direction is parallel to second direction D2.

In a cross section perpendicular to winding axis Z of wound electrode assembly 10, at each of the boundaries between the pair of flat portions 91 and the pair of curved portions 92, first boundary P1 and second boundary P2 are alternately disposed as to be positioned toward inward in the width direction from the outer peripheral side to the inner peripheral side of wound electrode assembly 10X.

Even with the configuration as described above, wound electrode assembly 10X according to Embodiment 2 achieves effects substantially similar to those of Embodiment 1. Additionally, as the boundaries between the pair of flat portions 91 and the pair of curved portions 92 are located as described above, curved portion 92 can be formed in a fan shape, causing curved portion 92 to deform more easily. This can suppress breakage or the like of curved portion 92 when a stress is applied to curved portion 92.

### (Embodiment 3)

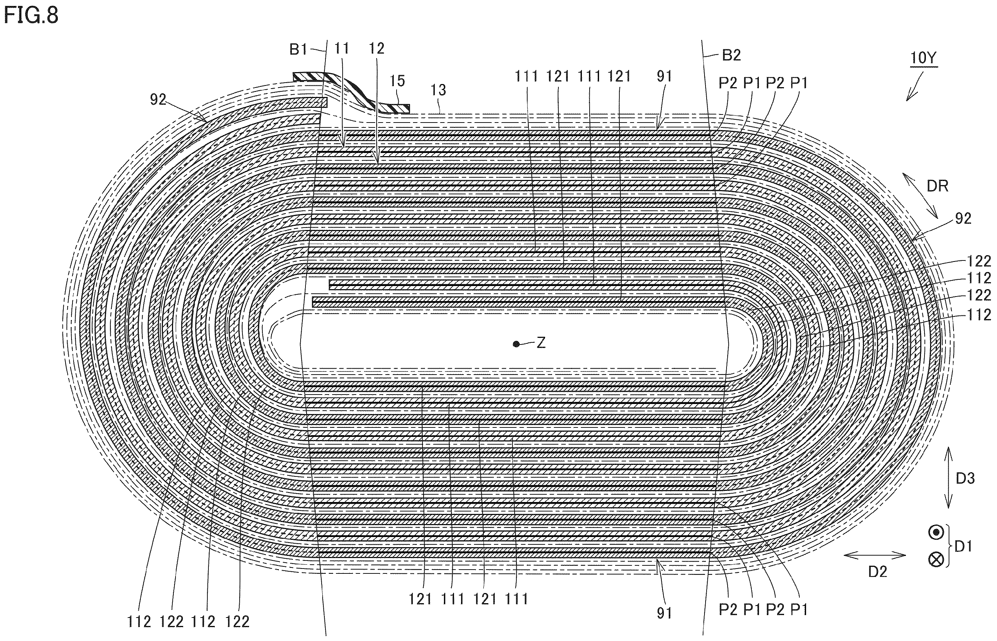

Fig. 8 is a sectional view of a wound electrode assembly according to Embodiment 3. Fig. 8 is a sectional view corresponding to the sectional view of the battery shown in Fig. 1 in Embodiment 1 as viewed in the direction of arrow III-III. Referring to Fig. 8, a wound electrode assembly 10Y according to Embodiment 3 will be described.

As shown in Fig. 8, in comparison, wound electrode assembly 10Y according to Embodiment 3 differs from wound electrode assembly 10 according to Embodiment 1 in the positions of the boundaries between the pair of flat portions 91 and the pair of curved portions 92. The other configurations are substantially the same.

When the direction orthogonal to the direction in which the pair of flat portions 91 face each other and to the winding axis Z direction of wound electrode assembly 10 is the width direction, in a cross section perpendicular to winding axis Z of wound electrode assembly 10Y, each of the boundaries between the pair of flat portions 91 and the pair of curved portions 92 is inclined outward in the width direction from the outer peripheral side to the inner peripheral side of wound electrode assembly 10. The width direction is parallel to second direction D2.

In a cross section perpendicular to winding axis Z of wound electrode assembly 10Y, at each of the boundaries between the pair of flat portions 91 and the pair of curved portions 92, first boundary P1 and second boundary P2 are alternately disposed as to be positioned toward outward in the width direction from the outer peripheral side to the inner peripheral side of wound electrode assembly 10.

Even with the configuration as described above, wound electrode assembly 10Y according to Embodiment 3 achieves effects substantially similar to those of Embodiment 1. Additionally, as the boundaries between the pair of flat portions 91 and the pair of curved portions 92 are located as described above, the ratio (length) of the metal foil disposed inside wound electrode assembly 10 can be made larger than the ratio (length) of the metal foil disposed outside wound electrode assembly 10 in the pair of flat portions 91.

In general, heat tends to accumulate inside a wound electrode assembly, but the above configuration can increase the ratio of the metal foil inside wound electrode assembly 10Y, thereby improving heat dissipation inside wound electrode assembly 10Y.

### (Other Modifications)

Embodiments 1 to 3 above have described by way of example the case where the thickness of first resin member 112 is smaller than that of first metal foil 111 and the thickness of second resin member 122 is smaller than that of second metal foil 121, but the present disclosure is not limited thereto. First resin member 112 and first metal foil 111 may have the same thickness, or first resin member 112 may have a thickness larger than that of first metal foil 111. Alternatively, second resin member 122 and second metal foil 121 may have the same thickness, or second resin member 122 may have a thickness larger than that of second metal foil 121.

Although the embodiments of the present disclosure have been described, it should be understood that the present embodiments disclosed herein are illustrative and non-restrictive in every respect. The scope of the present disclosure is defined by the terms of the claims and is intended to include any modifications within the scope and meaning equivalent to the terms of the claims.

## Claims

1. A wound electrode assembly (10, 10X, 10Y) having a positive electrode (11) and a negative electrode (12) wound in a flat shape with a separator (13) in between, the wound electrode assembly (10, 10X, 10Y) comprising a pair of flat portions (91) facing each other with a winding center in between and a pair of curved portions (92) connecting ends of the pair of flat portions (91) to each other, wherein
the positive electrode (11) includes a first base member (110) including a first metal foil (111) and a first resin member (112) alternately joined along a winding direction of the wound electrode assembly (10, 10X, 10Y),
the negative electrode (12) includes a second base member (120) including a second metal foil (121) and a second resin member (122) alternately joined along the winding direction,
in each of the pair of flat portions (91), the first metal foil (111) and the second metal foil (121) are alternately arranged in a direction in which the pair of flat portions (91) face each other, and
in each of the pair of curved portions (92), the first resin member (112) and the second resin member (122) are alternately arranged in a radial direction of the wound electrode assembly (10, 10X, 10Y).

2. The wound electrode assembly (10, 10X, 10Y) according to claim 1, wherein in a cross section perpendicular to a winding axis of the wound electrode assembly (10, 10X, 10Y),
a first boundary (P1) is located at boundaries (B1, B2) between the pair of flat portions (91) and the pair of curved portions (92), the first boundary (P1) being a boundary (B1, B2) between the first metal foil (111) and the first resin member (112), and
a second boundary (P2) is located at the boundaries (B1, B2) between the pair of flat portions (91) and the pair of curved portions (92), the second boundary (P2) being a boundary between the second metal foil (121) and the second resin member (122).

3. The wound electrode assembly (10) according to claim 2, wherein in the cross section perpendicular to the winding axis, at each of the boundaries (B1, B2) between the pair of flat portions (91) and the pair of curved portions (92), the first boundary (P1) and the second boundary (P2) are alternately disposed side by side in an arrangement direction in which the first metal foil (111) and the second metal foil (121) are alternately aligned.

4. The wound electrode assembly (10X) according to claim 2, wherein when a direction orthogonal to the winding axis and to a direction in which the pair of flat portions (91) face each other is a width direction, in the cross section perpendicular to the winding axis, at each of the boundaries (B1, B2) between the pair of flat portions (91) and the pair of curved portions (92), the first boundary (P1) and the second boundary (P2) are alternately disposed as to be positioned toward inward in the width direction from an outer peripheral side to an inner peripheral side of the wound electrode assembly (10X).

5. The wound electrode assembly (10Y) according to claim 2, wherein when a direction orthogonal to the winding axis and to a direction in which the pair of flat portions (91) face each other is a width direction, in the cross section perpendicular to the winding axis, at each of the boundaries (B1, B2) between the pair of flat portions (91) and the pair of curved portions (92), the first boundary (P1) and the second boundary (P2) are alternately disposed as to be positioned toward outward in the width direction from an outer peripheral side to an inner peripheral side of the wound electrode assembly (10Y).

6. The wound electrode assembly (10, 10X, 10Y) according to any one of claims 1 to 5, wherein the first resin member (112) has a thickness smaller than that of the first metal foil (111).

7. The wound electrode assembly (10, 10X, 10Y) according to claim 6, wherein the second resin member (122) has a thickness smaller than that of the second metal foil (121).
